# EUROPÄISCHE PATENTSCHRIFT

(11) **EP 0 753 168 B1**
(45) Veröffentlichungstag und Bekanntmachung des Hinweises auf die Patenterteilung: **03.06.1998**
(21) Anmeldenummer: 95914273.8
(22) Anmeldetag: 28.03.1995
(51) Int. Cl.: G05B 19/048, G05B 19/05, G05B 23/00

(54) **VERFAHREN ZUR AUTOMATISCHEN DIAGNOSE VON STÖRUNGSFÄLLEN**
PROCESS FOR AUTOMATIC FAULT DIAGNOSIS
PROCEDE POUR LE DIAGNOSTIC AUTOMATIQUE DE DEFAILLANCES

(30) Priorität: 31.03.1994 DE 4411363
(43) Veröffentlichungstag der Anmeldung: 15.01.1997
(73) Patentinhaber: SIEMENS AKTIENGESELLSCHAFT, 80333 München (DE)
(72) Erfinder: SCHWARZ, Peter, D-91056 Erlangen (DE); BUNGERT, Ulrich, D-91085 Weisendorf (DE); KRÄMER, Rolf, D-91085 Weisendorf (DE)
(86) Internationale Anmeldenummer: DE9500419
(87) Internationale Veröffentlichungsnummer: WO9527236

(56) Entgegenhaltungen:
- EP-A- 0 314 190
- CA-A- 2 107 051
- DD-A- 300 134
- DE-A- 4 226 536

## Beschreibung

Die Erfindung bezieht sich auf ein Verfahren zur automatischen Diagnose von Störungsfällen bei Prozessen und/oder Anlagen, die durch eine Ablaufsteuerung eines SPS-Programms kontrolliert werden, das als Kontaktplan (KOP), als Funktionsplan (FUP) oder als Anweisungsliste (AWL) erstellt ist.

Auf unterschiedlichen Gebieten der Technik werden Fertigungsprozesse und Fertigungsanlagen durch speicherprogrammierbare Steuergeräte gesteuert, die allgemein als SPS bezeichnet werden. Die Software solcher SPS wird üblicherweise auf Programmiergeraten als Kontaktplan (KOP), als Funktionsplan (FUP) oder als Anweisungsliste (AWL) erstellt. Dies ist im einzelnen beispielsweise in SPS-Magazin (1993), Heft 5, Seiten 16 bis 19 und Seiten 39 bis 40, insbesondere in der Veröffentlichung mit der Bezeichnung "Einheitliche SPS-Programmierung mit IEC 1131-3", dargelegt. Die dort angegebenen Reprasentationsformen des Programms sind weitgehend äquivalent, insbesondere können Kontaktplan (KOP) bzw. Funktionsplan (FUP) in eine Anweisungsliste (AWL) umgewandelt werden. Neben den angegebenen Werkzeugen zur Programmerstellung wird weiterhin zwischen zwei unterschiedlichen Programmtypen und zwar der Schrittkettensteuerung und der Verknüpfungssteuerung unterschieden.

Im Störungsfall eines SPS-gesteuerten Prozesses muß üblicherweise anhand des SPS-Programms und der darin verwendeten Operanden - wie Merker, Datenwörter, Ein-/Ausgangsbits - die Störungsursache eingegrenzt werden, um geeignete Maßnahmen zur Störungsbehebung zu ergreifen. Hierfür werden besonders geschulte Spezialisten benötigt, die eine Fehlerdiagnose vornehmen.

Aus der DD-A-300 134 ist ein Verfahren zur regelbasierten Überwachung durch Diagnose und Therapiesteuerung, insbesondere für hierarchisch strukturierte Automatisierungssysteme (ATS) bekannt. Der Zustand des ATS wird ständig im closed-loop-Betrieb überwacht und dabei die Wahrheitswerte bezüglich spezifizierter Diagnose-Bedingungen in einem Diagnose-Vektor aktuell gehalten. In Regelform vorhandenes Erfahrungswissen zur Anlagenfahrweise bildet in einer speziellen verdichteten Informationsdarstellung die Wissensbasis, welche ereignis- oder zeitgesteuert mittels des Diagnose-Vektors ausgewertet wird. Bei Indikation eines therapiewürdigen Zustandes des ATS werden die erfahrungsgemäß geeigneten Steuerhandlungen automatisch realisiert. Dabei sind Zeitüberwachung und Sinnfälligkeitsprüfung möglich.

Die CA-A-21 07 051 bzw. die korrespondierende EP-A-590 571 beschreibt ein wissensbasiertes Verfahren zur automatischen Diagnose von Störungsfällen in industriellen Produktionsanlagen. Dabei wird eine Wissensbasis mit einer Hierarchie von Wissenselementen erstellt, die der Bedienperson Rat und Anleitung gibt, ihr das Auffinden einer Fehlerursache ermöglicht und sie zur bestmöglichen Lösung des jeweiligen Problems befähigt.

Der im Anspruch 1 angegebenen Erfindung liegt das Problem zugrunde, ein Verfahren zur automatischen Diagnose von Störungsfällen vorzuschlagen, das im Falle einer Störung an einer SPS-gesteuerten Anlage zum Einsatz kommen kann.

Mit der Erfindung ist erreicht, daß im Störungsfall eine geeignete Wissensbasis bereitsteht, die mit Hilfe einer Ablaufumgebung, die als Diagnoseshell bezeichnet wird, die Vorgehensweise eines Instandsetzers auf einem Rechner nachahmen kann. Die Diagnose-Shell bearbeitet die Wissensbasis, ermittelt im On-line-Dialog mit dem Automatisierungsgerät die verdächtigen Prozeßzustandssignale und teilt sie dem Maschinenführer mit, der damit die Funktion des Instandsetzers übernehmen kann.

Weitere Einzelheiten und Vorteile der Erfindung ergeben sich aus der nachfolgenden Beschreibung von Ausführungsbeispielen. Dabei wird auf die Figuren der Zeichnung mit Funktionsplänen zu Einzelpunkten verwiesen. Es zeigen
- **Figur 1**: eine allgemeine Schrittkettenstruktur.
- **Figur 2**: den Ausschnitt aus einem Ablaufsteuerprogramm,
- **Figur 3**: die oberste Ebene eines Entscheidungsbaums zur Schrittkettendiagnose,
- **Figur 4**: den Aufbau einer Schrittzelle,
- **Figur 5**: die Weiterschaltbedingungen einer Schrittkette,
- **Figur 6**: die Und-Verknüpfung auf einen nichtinvertierenden Eingang der Basiskonjunktion,
- **Figur 7**: die ODER-Verknüpfung auf einen nichtinvertierenden Eingang der Basiskonjunktion, die
- **Figuren 8** und **9**: entsprechende Verknüpfungen für einen invertierenden Eingang der Basiskonjunktion,
- **Figur 10**: die Ableitung einer Fehlerbaumstruktur
- **Figur 11** bis **14**: die Anwendung letzterer Prinzipien bei einer spezifischen Fertigungsaufgabe und
- **Figur 15**: einen dafür realisierter Entscheidungsbaum.

Um das SPS-Programm in eine diagnosegerechte Struktur umsetzen zu können, ist es erforderlich, vorhandene Schnittkettten als solche zu erkennen.

Beim Konzept einer Ablaufsteuerung über Schrittketten wird der gesamte zu steuernde Prozeß in einzelne Teilschritte gegliedert, die sequentiell bearbeitet werden. Zu Beginn eines jeden Schrittes wird geprüft, ob alle für den Prozeßschritt erforderlichen Voraussetzungen erfüllt sind. Ist dies der Fall, wird der Schritt aktiviert und es werden die den Prozeßschritt ausmachenden Aktionen ausgelöst. Anschließend geht das SPS-Programm zur Bearbeitung des nächsten Prozeßschrittes über, wobei zunächst wieder die Voraussetzungen für den nächsten Schritt geprüft werden, um danach die zugehörigen Aktionen auszulosen. Es findet also ein Wechselspiel zwischen Prüfen von Voraussetzungen und Auslösen von Aktionen statt, das sich solange wiederholt, bis der gesamte Prozeßablauf einmal vollständig ausgeführt ist.

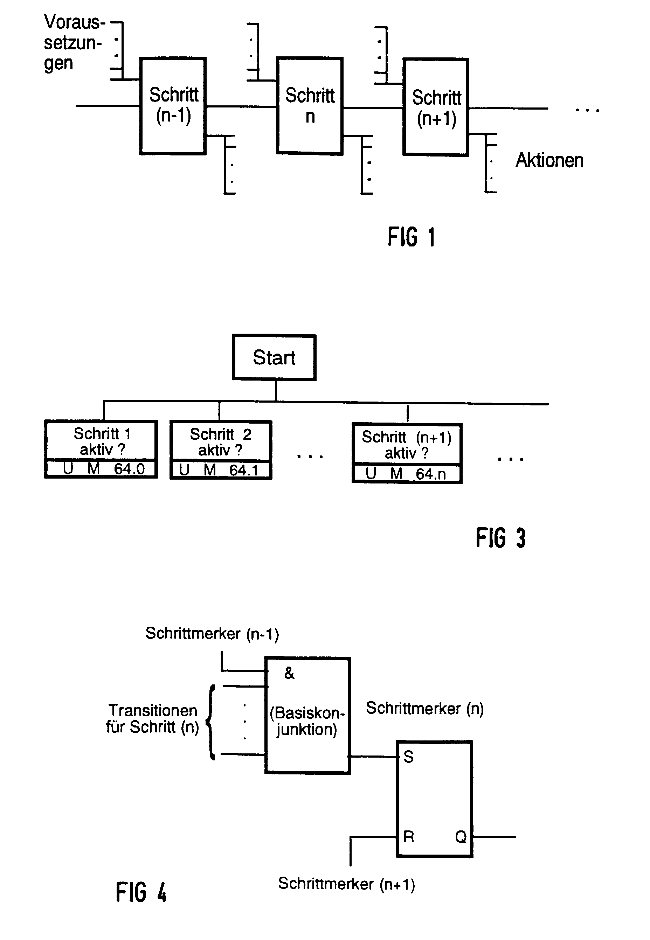

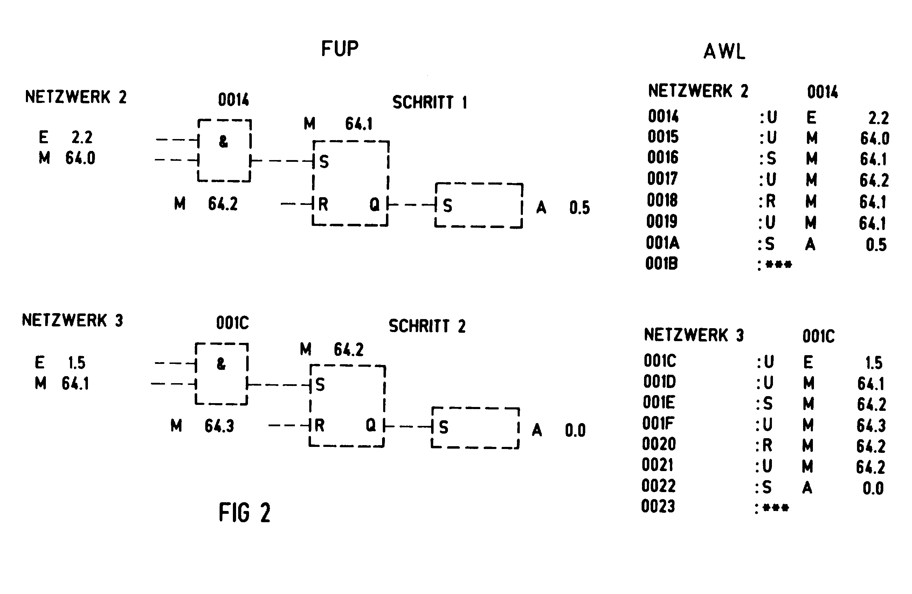

In einem SPS-Programm wird die Bearbeitung einer Schrittkette nach Art eines Schieberegisters organisiert. Ein Zustandsbit - ein sogenanntes Flag - das den augenblicklichen Stand der Prozeßschrittfolge signalisiert, wird Schritt für Schritt weitergeschaltet. Dadurch wird sichergestellt, daß immer nur ein Prozeßschritt gleichzeitig aktiv ist und daß die Prozeßschritte in der korrekten Reihenfolge bearbeitet werden. Dies ist an der Figur 1 verdeutlicht, welche die grundsätzliche Struktur eines Schrittketten-Steuerprogramms wiedergibt.

Gemäß dem Stand der Technik gibt es verschiedene Möglichkeiten zur programmtechnischen Ausführung von Schrittketten in SPS-Programmen. Allen Lösungen ist gemeinsam, daß die Schritt-Flags als Speicherelemente angelegt sind, welche üblicherweise als Schrittmerker bezeichnet werden.

Daraus ergibt sich, daß das Setzen der Flags für den Schritt n vom Vorhandensein des Flags für den Schritt n-1 und vom Erfülltsein der Vorbedingungen für den Schritt n abhängt. Das Rücksetzen des Flags für Schritt n wird umgehend beim Aktivwerden des Flags für Schritt n+1 veranlaßt.

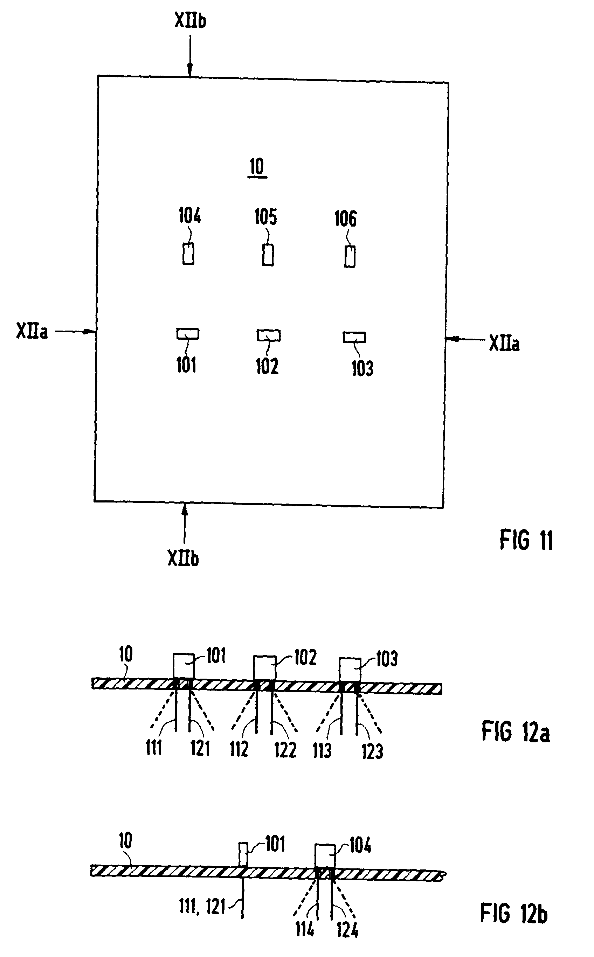

Aus der Figur 2 ergibt sich ein typischer Ausschnitt eines Ablauf-Steuerprogramms als Funktionsplan (FUP) und als Anweisungsliste (AWL). Das Steuerprogramm ist in diesem Fall für ein Bearbeitungsbeispiel gemäß den Figuren 11 bis 14 realisiert, anhand derer weiter unten eine Vorrichtung zum Umbiegen der Anschlüsse bedrahteter Kondensatoren in einer halbautomatischen Leiterplattenfertigung beschrieben wird. Dabei sind die Schrittketten-Flags unter anderem die Merker **M64.0** bis **M64.7**. Auf einen solchen Prozeß beziehen sich die nachfolgenden Ausführungen.

Im Falle einer Störung wird der Prozeß unterbrochen. Da das Stehenbleiben des Prozesses bzw. der zugehörigen Anlagen mit dem Stehenbleiben der steuernden Schrittketten einhergeht, müssen für eine vollautomatische Störungsdiagnose zunächst die Schrittketten innerhalb des kompletten SPS-Programms identifiziert werden. Das automatische Auffinden der im Programmcode ausgeführten Schrittketten ist demzufolge Grundvoraussetzung für die systematische Fehlerdiagnose. Im ersten Diagnoseabschnitt muß anhand der Schrittketten der Zustand ermittelt werden, in dem der Prozeß stehengeblieben ist.

Zur automatischen Identifikation der in einem SPS-Programm vorkommenden Schrittketten kann man die vorstehend beschriebene Beziehung ausnutzen. Prinzipiell ist bei der Untersuchung einer unbekannten AWL jeder Operand mit Speicherverhalten potentieller Ausgangspunkt einer Schrittkette, beispielsweise bei Figur 2:
**S M 64.1**.

Dies wird aber erst bestätigt, wenn der Speicheroperand selbst, und zwar in Figur 2 **M64.1**, als Bedingung für das Setzen eines weiteren Speicheroperanden auftaucht. Dies ist z.B. 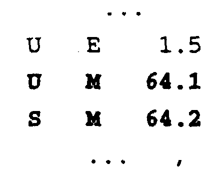 wobei erst der zweite Speicheroperand, und zwar **M64.2**, das Rücksetzen des ersten veranlaßt. Daraus ergibt sich beispielsweise

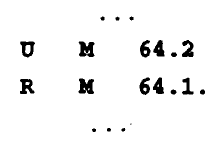

Man erkennt also, daß zwei in dem beschriebenen Zusammenhang stehende Speicherelemente den Minimalausbau einer Schrittkette darstellen. Das zweite Speicherelement, und zwar M64.2, kann dann in entsprechender Weise untersucht werden, ob es mit einem weiteren Speicherelement in einer Schrittkettenbeziehung steht. Diese Untersuchung wird bis zur Identifizierung aller Glieder der Schrittkette fortgesetzt.

Bei letzterer Vorgehensweise zur Identifikation von Schrittketten in AWL's ergibt sich, daß ausschließlich ein SPS-Programm in Form einer AWL notwendig ist. Damit werden alle im SPS-Programm implementierten Schrittketten bezüglich der verwendeten Speicheroperanden identifiziert. Es können auch verzweigte oder schleifenförmige Schrittkettenstrukturen erkannt werden, da jedes Schrittkettenglied Ausgangspunkt für einen, aber auch für mehrere Nachfolger sein kann und da ein bereits früher verwendeter Schrittmerker auch wieder Nachfolgender eines späteren sein kann.

Um im Fehlerfall eine Diagnose durchführen zu können, müssen die gefundenen Schrittketten als Wissensbasen aufbereitet werden. Gemäß Figur 3 wird dazu die allgemein verbreitete Form der Entscheidungsbäume verwendet, wobei die als Schrittmerker identifizierten Speicheroperanden in der obersten Ebene eines solchen Baumes angeordnet werden. Im Diagnosefall wird anhand der Schrittmerker ermittelt, in welchem Zustand der Prozeß steht und welcher Schritt als nächster zur Ausführung hätte gelangen müssen. Die Abfrage des aktiven Schrittmerkers kann dann im On-line-Dialog zwischen SPS und Diagnoserechner erfolgen. Die Ursache für das Stehenbleiben der Schrittkette ist in den Transitionen für den Prozeßschritt, der nicht mehr zur Ausführung gelangt, zu suchen.

In einem zweiten Diagnoseabschnitt wird eine Transitionsanalyse durchgeführt. Hier wird untersucht, welche Weiterschaltbedingungen für diesen nächsten Prozeßschritt erfüllt sein müssen. Das Erkennen nichterfüllter Weiterschaltbedingungen liefert dabei direkte Hinweise auf Prozeßkomponenten oder Prozeßzustände, die für die Störung des Prozeßablaufes verantwortlich sind.

In Figur 4 ist eine sogenannte Schrittzelle dargestellt, aus der die Weiterschaltbedingungen eines Prozeßschrittes als direkte oder indirekte Eingänge der Basiskonjunktion erkennbar sind. Im einfachsten Fall hängt die Freigabe des nächsten Prozeßschrittes von Prozeßzuständen ab, die mittels binärer Sensoren erfaßt werden und immer in gleicher Weise vorliegen müssen. Solche Prozeßzustandssignale werden unmittelbar als zusätzliche Eingänge an die Basiskonjunktion angehängt und stellen direkte Weiterschaltbedingungen dar.

Letzteres wird im Fehlerbaum gemäß Figur 3 berücksichtigt. Dabei wird davon ausgegangen, daß Fragen nach den Prozeßzustandssignalen so formuliert sind, wie sie in der AWL-Darstellung des SPS-Programms niedergelegt sind. Daraus ergeben sich nicht-invertierte Zustandsfragen mit dem Erwartungswert "**high**" invertierte Zustandsfragen mit dem Erwartungswert "**low**". Da das Auftreten des Erwartungswertes die Weiterschaltbedingungen erfüllt, ist bei diesem Konzept die Fragesematik positiv.

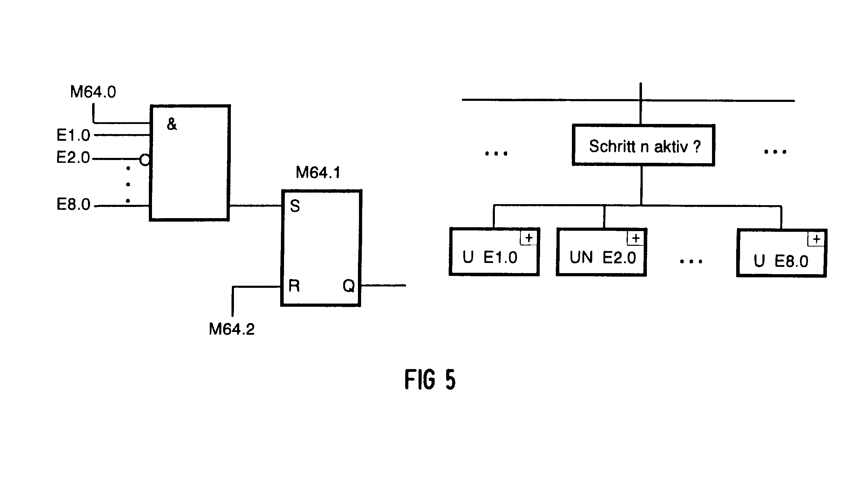

Bei einer Diagnose müssen alle Prozeßsignaleingange als fehlerhaft markiert werden, die nicht das Potential des Erwartungswertes aufweisen. Werden anstelle direkter Signaleingänge Merkervariable verwendet, so werden diese völlig entsprechend den Eingängen behandelt. Merker können jedoch anhand des SPS-Programmes weiter entschlüsselt werden. Dies wird anhand Figur 5 verdeutlicht.

In praktischen Fällen wird also zunächst aus mehreren binären Prozeßsignalen ein zusammengesetztes Zustandssignal abgeleitet und es wird nur das Ergebnis einer logischen Verknüpfung an die Basiskonjunktion der Schrittzelle angeschlossen. Aufgrund der Vielfalt logischer Verknüpfungsmöglichkeiten müssen dabei mehrere Fälle getrennt diskutiert werden.

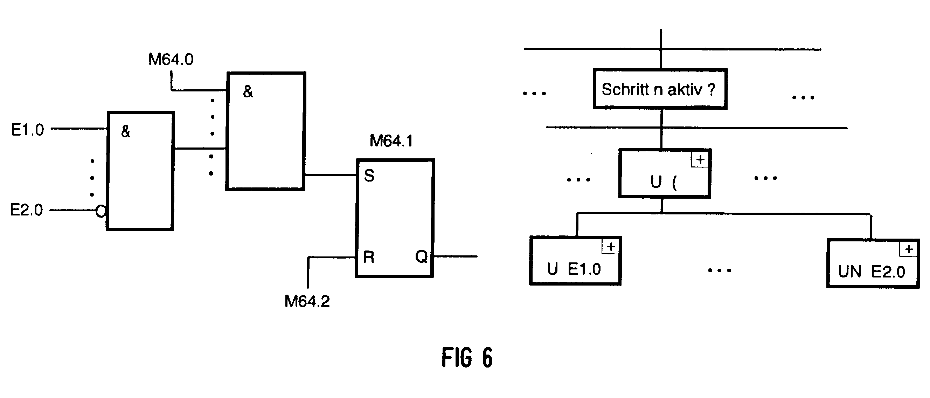

Liegt an einem nicht-invertierenden Eingang der Basiskonjunktion der Ausgang eines vorgeschalteten UND-Gatters an, so wird dieser Eingang der Basiskonjunktion durch ein Frageobjekt im Fehlerbaum repräsentiert. Die Eingänge des vorgeschalteten UND-Gatters werden daher entsprechend ihrer Darstellung in der AWL als reine Frageobjekte in einer zusätzlichen Ebene des Fehlerbaumes eingeführt. Die Fragesemantik ist auch in diesem Fall stets positiv, da nur die Erwartungswerte an allen Eingängen des vorgelagerten UND-Gatters den Erwartungswert für den Eingang der Basiskonjunktion liefert. Dies ist anhand der Figur 6 verdeutlicht. Bei der Diagnosedurchführung werden daher alle Prozeßsignaleingange als sicher fehlerhaft markiert, die nicht das Potential des Erwartungswertes aufweisen.

Liegt an einem nichtinvertierenden Eingang der Basiskonjunktion ein vorgeschaltetes ODER-Gatter an, so wird auch hier der Eingang der Basiskonjunktion durch ein Frageobjekt repräsentiert. Die Eingänge des vorgeschalteten ODER-Gatters werden entsprechend der AWL als zusätzliche Ebene im Fehlerbaum arrangiert. Die Fragesemantik bleibt auch hier wieder positiv, da der Erwartungswert der Basiskonjunktion nur dann erfüllt wird, wenn mindestens ein Prozeßeingang des vorgelagerten ODER-Gatters das Erwartungswert-Potential aufweist.

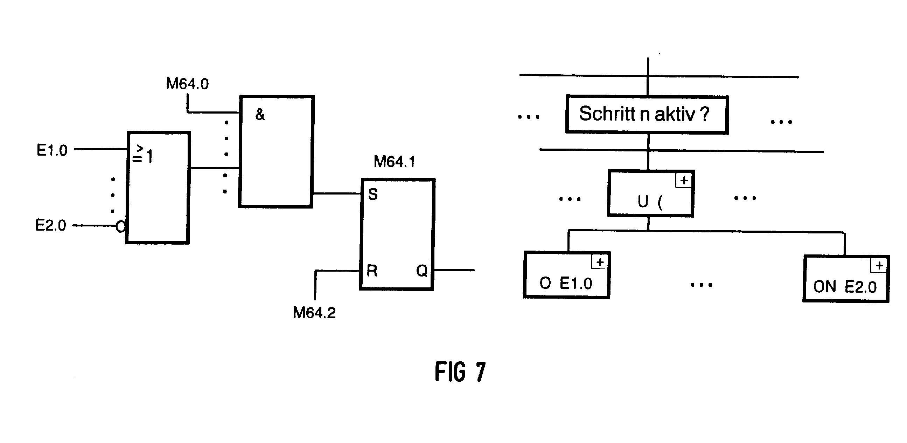

Bei der Durchführung der Diagnose wird das ODER-Gatter nur dann als verdächtig markiert, wenn es am Ausgang nicht den Erwartungswert der Basiskonjunktion liefert. In diesem Fall ist jeder Eingang des ODER-Gatters in gleicher Weise verdächtig, da aus der logischen Struktur des SPS-Programms nicht hervorgeht, welches der verknüpften Prozeßsignale in der speziellen Situation seinen Erwartungswert hätte annehmen müssen. Dies ist anhand Figur 7 verdeutlicht.

Liegt an einem invertierenden Eingang der Basiskonjunktion ein vorgeschaltetes UND-Gatter, so wird dieser Eingang durch ein Frageobjekt **UN** im Fehlerbaum repräsentiert. Die Eingänge des vorgeschalteten UND-Gatters ergeben auch hier eine weitere Ebene im Fehlerbaum entsprechend der Ausführung der AWL. Im Gegensatz zu den beiden zuvor behandelten Fällen ist die Fragesemantik hier negativ, da die Erwartungswerte an den Eingängen des vorgelagerten Gatters den Ausgangswert "high" liefern und damit den Erwartungswert der Basiskonjunktion nicht erfüllen.

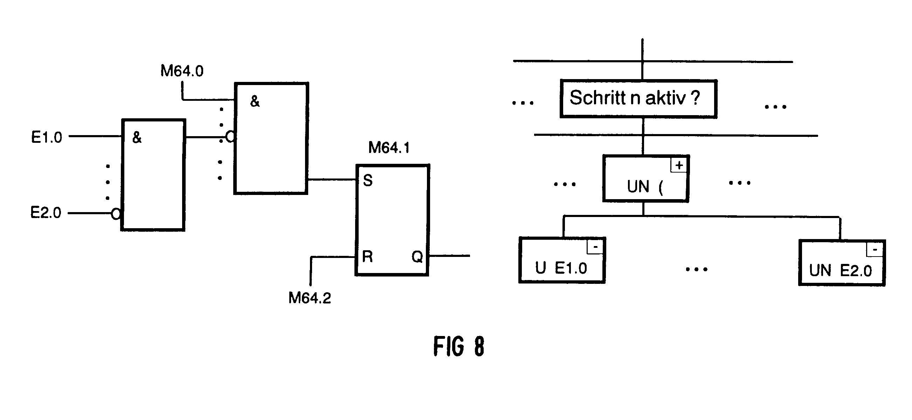

Bei der Durchführung der Diagnose wird das vorgelagerte UND-Gatter immer dann als Störungsindikator identifiziert, wenn alle seine Eingänge auf Erwartungswertpotential liegen. Entsprechend der vorher behandelten ODER-Verknüpfung auf nichtinvertierenden Eingängen der Basiskonjunktion ist dann jeder dieser Eingänge potentieller Störungsindikator und muß als solcher markiert werden. Dies ergibt sich aus Figur 8.

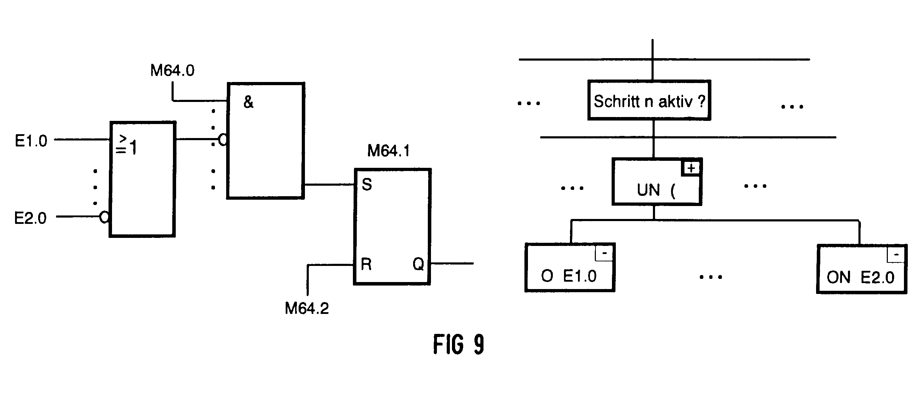

Liegt an einem invertierenden Eingang der Basiskonjunktion ein vorgeschaltetes ODER-Gatter, so wird dieser Eingang entsprechend dem vorhergehenden durch **UN** dargestellt. Die Eingänge des ODER-Gatters werden ganz entsprechend in eine weitere Frageobjektebene des Fehlerbaumes umgewandelt. Die Fragesemantik dieser neuen Ebene ist infolge des invertierenden Eingangs der Basiskonjunktion wieder negativ. Das ODER-Gatter liefert am Ausgang nur dann den Erwartungswert der Basiskonjunktion "**low**", wenn keiner seiner Eingänge das Erwartungswertpotential hat. Letzteres ist in Figur 9 dargestellt. Daraus ergibt sich, daß jeder Eingang des ODER-Gatters, der im Diagnosefall den Erwartungswert aufweist, die Weiterschaltung der Prozeßschrittkette verhindert und somit ein sicherer Wegweiser zu vorliegender Prozeßstörungsursache ist.

Die vorangehenden Beispiele zeigen, daß jeder Transitionseingang der Basiskonjunktion und gegebenenfalls vorgelagerter logischer Gatter im Fehlerbaum als Frageobjekt repräsentiert wird. Dabei entsprechen die Hierarchieebene der Frageobjekte im Fehlerbaum der Hierarchie der Verknüpfungsebenen in einer FUP-Darstellung des SPS-Programms. Im Fehlerbaum selbst werden die Fragen nach den Prozeßzuständen in gleicher Weise formuliert, wie sie in der AWL-Darstellung des SPS-Programms erscheinen. Dies wird als Erwartungswertkonzept bezeichnet.

Mit diesen Grundlagen können auch mehrfach verknüpfte Weiterschaltbedingungen realisiert werden. Liegen an den Eingängen eines der Basiskonjunktion vorgelagerten Verknüpfungsgliedes noch immer nichtausschließlich die Prozeßzutandssignale an, sondern in einer hierarchischen Ordnung die Ausgangssignale weiterer Verknüpfungsgatter, so lassen sich obige Maßnahmen einfach auf mehrere vorgelagerte Ebenen erweitern. Es gelten somit entsprechende Aussagen.

Außer den vorstehend betrachteten statischen Transitionsbedingungen, mit deren Hilfe überwacht wird, ob zum Zeitpunkt der Weiterschaltung der Schrittkette bestimmte Prozeßzustände in einer vorgegebenen Weise anstehen, sind in SPS-Programmen auch dynamische Weiterschaltbedingungen üblich und notwendig. Diese kontrollieren, ob eine bestimmte Anzahl von Ereignissen aufgetreten ist, d.h. sie wirken als Zähler, oder ob seit dem Auftreten eines Ereignisses eine vorgeschriebene Zeit eingehalten wurde, d.h. sie wirken als Timer. Die Ausgänge solcher Programmelemente können an die Eingänge von Basiskonjunktionen angeschlossen werden. Im Diagnosefall müssen auch sie automatisch analysiert werden.

Im einzelnen sind hierzu das RS-Flip-Flop, der Zähler und der Timer zu beachten: Liegt am nichtinvertierenden Eingang einer Basiskonjunktion ein RS-Flip-Flop, so wird dieses fehlerverdächtig, wenn sein Ausgang bei der Schrittketten-Diagnose nicht das Potential des Erwartungswertes besitzt. Die mögliche Ursache hierfür ist, daß das Flip-Flop im Prozeßablauf nicht ordnungsgemäß gesetzt wurde, womit sein Setzeingang fehlerverdächtig ist. Es ist aber auch möglich, daß das Flip-Flop, obwohl es gesetzt war, durch einen gestörten Prozeßzustand vorzeitig zurückgesetzt wurde. Damit ist in gleicher Weise der Rücksetz-Eingang fehlerverdächtig.

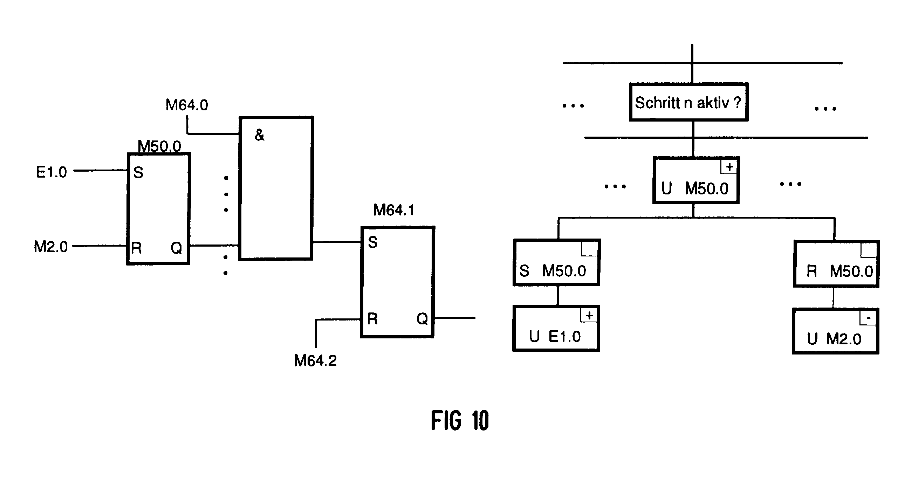

Zur Umsetzung eines Flip-Flop in eine Fehlerbaumstruktur müssen entsprechend der AWL Objekte für den Setz- und RücksetzEingang im Fehlerbaum eingefügt werden. Diese Objekte dienen ausschließlich strukturellen Kriterien. Die Bedingungen für das Setzen bzw. Rücksetzen werden gemäß dem Erwartungskonzept als weitere Ebene im Fehlerbaum angehängt. Dies ist in Figur 10 dargestellt.

Ähnlich wie ein Flip-Flop verhält sich im Diagnosefall auch ein Zähler. Wesentlicher Unterschied ist, daß zum Zeitpunkt der Transition der Schrittkette nicht ein einzelnes Ereignis aufgetreten sein muß, sondern eine festgelegte Anzahl von Ereignissen.

Hat im Diagnosefall ein Zähler seinen vorgesehenen Endstand nicht erreicht, wird der Eingang in die Liste fehlerverdachtiger Prozeßzustandssignale aufgenommen werden. Die Umsetzung in eine Fehlerbaumstruktur erfolgt entsprechend.

Wenn ein Zeitglied als Eingang einer Basiskonjunktion verarbeitet wird, kann die Betrachtung der statischen Prozeßzutände nicht klären, welcher Fehler im zeitlichen Ablauf aufgetreten ist, da ein automatischer Diagnoseablauf nicht unmittelbar im Augenblick des Stehenbleibens der Prozeßschrittkette stattfindet. Hier wird ein sogenanntes Timerobjekt eingeführt, dessen Eingangsbedingungen bei nichterfülltem Erwartungswert am Ausgang in die Liste fehlerverdächtiger Prozeßzustandssignale aufgenommen werden.

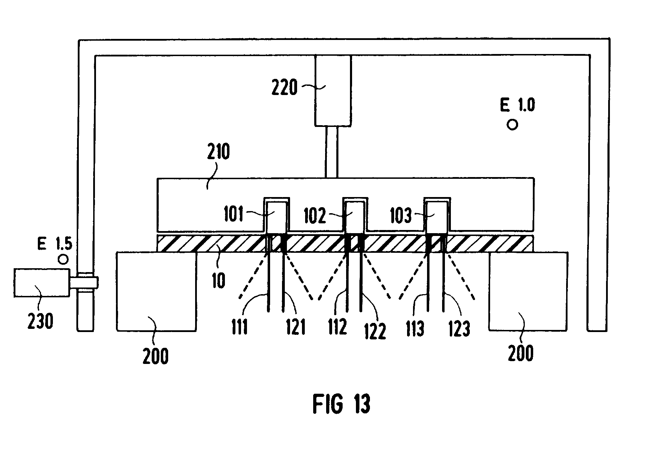

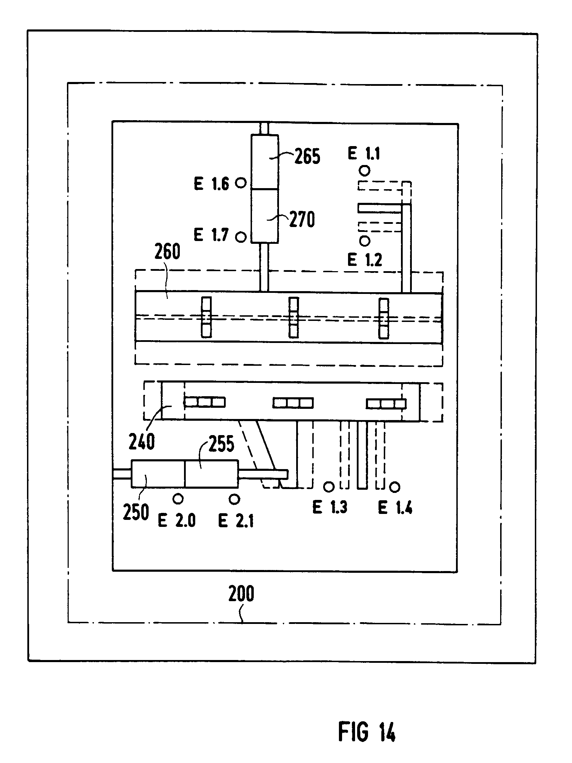

Vorstehend beschriebenes Diagnoseverfahren wurde für verschiedene SPS-gesteuerte Montageprozesse erprobt: Eine einfache Anwendung besteht beispielweise bei der Bestückung einer Leiterplatte mit Bauteilen, bei der neben SMD-Bauteilen auch Kondensatoren in bedrahteter Ausführung montiert werden müssen. In Figur 11 und 12 ist eine derartige Leiterplatte mit 10 bezeichnet, die Bohrungen 11, 12 etc. aufweist, die zur Aufnahme von Kondensatoren 101 bis 106 vorgesehen sind. Die Montage derartiger Kondensatoren lolff kann per Hand erfolgen, wobei jeweils einem Kondensator 101ff zugehörige Anschlußdrähte 111,121ff mit einer automatisierten Vorrichtung definiert abgekantet werden. Angestrebt wird aber, den gesamten Fertigungsvorgang automatisiert durchzuführen, wozu entsprechend Fertigungsvorrichtungen notwendig sind. In Figur 13 und 14 ist eine Fertigungsvorrichtung wiedergegeben, die aus einer Aufnahme 200 besteht, in die je eine mit Kondensatoren 101 ff. bestückte Platine 10 ff. eingelegt werden kann. Damit die Kondensatoren 101, 102 ff. während der Bearbeitung in ihrer Lage fixiert sind, werden sie mit einer Druckplatte 210 arretiert. Diese kann mit einem Pneumatikzylinder 220 vertikal angehoben und abgesenkt werden. Die Druckplatte 210 wird während des Abkantvorganges mit Hilfe eines Verriegelungszylinders 230 zwangsweise in ihrer Position gehalten. Die Anschlußdrähte 111, 121 ff. der in Längsrichtung angeordneten Kondensatoren 101 ff. werden mit Hilfe eines Längsschiebers 240 nach rechts bzw. links gebogen. Der Langsschieber 240 wird durch zwei in Reihe geschaltete Pneumatikzylinder 250 und 255 betätigt. Befindet sich der linke Zylinder 250 am rechten Anschlag und der rechte Zylinder 255 am linken Anschlag des jeweiligen Fahrweges, so steht der Langsschieber 240 in der Mittelstellung zwischen den Kondensatorbeinchen.

Die in Querrichtung angeordneten Kondensatoren 101 ff. werden mit Hilfe eines Querschiebers 260 bearbeitet, der mit zwei in Reihe geschalteten Pneumatikzylindern 265 und 270 in gleicher Weise wie der Langsschieber 240 aufgebaut ist. Ein nicht im einzelnen dargestelltes Hauptventil wird zur Freigabe der Druckluftversorgung gesteuert. Die Sensorsignale für die Steuerung werden durch digitale Näherungsschalter E1.1 bis E2.1 zur Verfügung gestellt, deren Lage in der Figur 14 angegeben ist. Damit können die Lage der Druckplatte 210, des Verriegelungszylinders 220 und der beiden Schieber 250 und 55 erfaßt werden.

Für die Steuerung des Bearbeitungsvorganges mit der Vorrichtung 200 wird von einem speicherprogrammierbaren Automatisierungsgerät (AG) kontrolliert, dessen Programm die Form einer Anweisungsliste hat und die im Anhang wiedergegeben ist. Sie besteht im einzelnen aus einem Organisationsbaustein OB1 und verschiedenen Programmbausteinen PB1 bis PB3. Es erfolgt folgender Ablauf:
Vom Organisationsbaustein OB1, der zyklisch abgearbeitet wird, werden die drei Programmbausteine PB1, PB2 und PB3 aufgerufen. Der Programmbaustein PB1 besteht aus 14 Netzwerken, in denen im wesentlichen die einzelnen Schritte des Bearbeitungsvorganges durchgeführt werden. Im Netzwerk 1 wird überprüft, ob die Vorrichtung in Grundstellung steht und die Schrittkette derzeit nicht aktiv ist. Wenn dies erfüllt ist und eine Wartezeit abgelaufen ist, wird der Merker **M64.0** gesetzt und die Schrittkette damit gestartet.

Im Netzwerk 2 wird untersucht, ob die Druckplatte 210 in Arbeitsposition ist und dann der Verriegelungszylinder 220 vorgefahren. Damit ist der erste Schritt ausgeführt, was durch Setzen des Schrittmerkers **M64.1** angezeigt wird, was das Aktivieren des Schrittes 2 bedeutet.

Im Netzwerk 3 wird untersucht, ob der Verriegelungszylinder 240 aufgefahren ist. Sobald dies erfüllt ist, wird der Druckplattenzylinder 210 ausgefahren und der dritte Schrittmerker **M64.2** gesetzt.

Ganz entsprechend haben die Netzwerke NW4 bis NW11 bestimmte Funktionen beim Bestückungsvorgang, wobei diesem die Schrittmerker **M64.3** bis **M65.1** zugeordnet sind. Die verbleibenden Netzwerke NW12, NW13 und NW14 dienen dazu, beim Erreichen der jeweiligen Endlagen von Quer- und Langsschieber eine Wartezeit anzustoßen bzw. den Programmbaustein abzuschließen.

Der Programmbaustein PB2 dient dazu, aus den Sensorsignalen des Quer- und Längsschiebers abzuleiten, wann beide Schieber gleichzeitig in Mittelstellung stehen. Diese Information wird in dem Schrittmerker **M67.0** zusammengefaßt. Der Programmbaustein PB3, der durch die Funktionsbausteine FB1 und FB2 unterstützt wird, realisiert schließlich einen Stückzähler und ist für die Ablaufsteuerung selbst ohne Belang.

Eine Anweisungsliste entsprechend Anhang 1 kann durch Rückübersetzung des auf dem Automatisierungsgerät der Biegevorrichtung bearbeiteten Programms erzeugt werden. Sie ist ein typisches Beispiel dafür, wie im Störungsfall die Diagnose erfolgen muß:
Zunächst kann nicht sofort erkannt werden, ob Schrittketten implementiert wurden und ggf. mit welchen Speicheroperanden die Schrittketten ausgeführt wurden. Im allgemeinen ist es sehr mühsam und zeitaufwendig, die Transitionsbedingungen der einzelnen Schritte im Programmcode zu analysieren.

Durch Anwendung des oben beschriebenen Verfahrens der Schrittkettenanalyse ist es nun unter Zuhilfenahme eines Rechners möglich, herauszufinden, welche der verwendeten Operanden in einer Schrittkettenbeziehung zueinander stehen. Es sind dies im betrachteten Beispiel die Merker **M64.0 M64.1 M64.2 M64.4 M64.5 M64.6 M64.7 M65.0 M65.1**. Aufbauend auf die gefundenen Schrittmerker kann nun die oberste Ebene eines Entscheidungsbaumes angelegt werden. Damit ist eine entscheidende Hilfe bei der Durchführung einer Störungsdiagnose gegeben. Im Diagnosefall wird untersucht, in welchem Schritt der Kette der Fertigungsprozeß zum Stehen gekommen ist.

Ganz entsprechend erfolgt die Transitionsanalyse. Im Störfall müssen alle Transitionen für den zur Ausführung anstehenden Prozeßschritt bis auf Sensorsignale zurückgeführt werden. Die Anwendung auf die Weiterschaltung der erwähnten Schrittmerker **M64.5** auf **M64.6** zeigt, daß der Merker **M67.0** gesetzt sein muß, damit die Schrittkette an dieser Stelle weiterläuft.

Der Zustand der Schrittmerkers **M67.0** hängt ab von den Eingangssignalen **E1.1, E1.2, E1.3**, **E1.4, E1,6, E1.7, E2.0**, **E2.1**. Demzufolge werden alle genannten Eingangssignale in einer weiteren Ebene als Frageobjekte an den Merker **M67.0** angehangt.

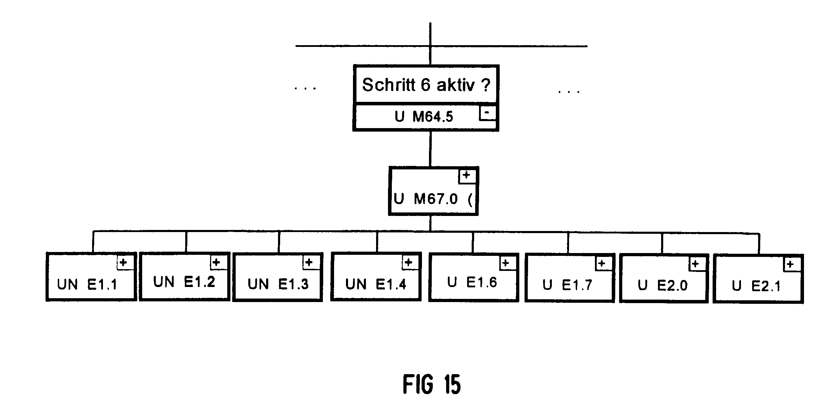

Damit ist an dem beschriebenen Beispiel ein Ast des Entscheidungsbaumes bis auf die Eingangssignale aus der Anlage zurückgeführt. Eine solche Ausführung dieses Astes des Entscheidungsbaumes ist in der Figur 15 wiedergegeben. Damit kann leicht überprüft werden, welches oder welche der Eingangssignale die Abarbeitung der Schrittkette blockiert haben. Bei einer umfangreichen Anlage mit mehreren 100 Eingangssignalen und zum Teil stark im Gesamtprogramm verflochtenen Transitionsbedingungen bedeutet obige Aufbereitung eine erhebliche Erleichterung des Diagnosevorgangs.

Der in Figur 15 realisierte Fehlerbaum kann nicht nur graphisch dargestellt, sondern auch als Wissensbasis für ein Expertensystem hinterlegt werden. Verwendet man eine Expertensystem-Shell, die über eine On-line-Prozeßschnittstelle zu Automatisierungsgeraten verfügt, so kann diese Expertensystem-Shell auf der automatisch erzeugten Wissensbasis aufsetzen und im Störungsfall einerseits ermitteln, in welchem Schritt der Fertigungsprozeß zum Stillstand kam, und andererseits, welche Eingangssignale für den Stillstand verantwortlich sind.

Bei dem anhand der Figuren 11 bis 14 beschriebenen Beispiel kann dies bedeuten, daß der durch M64.5 aktivierte Prozeßschritt nicht abgeschlossen werden konnte, weil M67.0 nicht gesetzt wurde. **M67.0** wurde aber nicht gesetzt, weil beispielsweise **E1.1** nicht aktiviert wurde und **E1.7** nicht gesetzt ist. Aus der bei SPS-Programmen üblichen Zuordnungsliste läßt sich entnehmen, daß der Querschieber 260 und die zugehörigen Pneumatikzylinder 265, 270 nicht ausgefahren wurden. Damit ist also die Störungsursache weitgehend automatisiert aufgefunden und kann nach minimaler Fehlersuchzeit behoben werden.

Durch das vorstehend im einzelnen beschriebene Verfahren bekommt der Maschinenbediener innerhalb kürzester Zeit die entscheidenden Hinweise auf den Ort und damit auf den Grund einer Störungsursache, ohne daß er selbst Kenntnisse im Umgang mit einer SPS-Steuerung haben muß.

## Patentansprüche

1. Verfahren zur automatischen Diagnose von Störungsfallen bei Prozessen und/oder Anlagen , die durch eine Ablaufsteuerung eines SPS-Programms kontrolliert werden, das als Kontaktplan (KOP), als Funktionsplan (FUP) oder als Anweisungsliste (AWL) erstellt ist,
gekennzeichnet durch folgende Schritte:
a) bei als Kontaktplan (KOP) oder als Funktionsplan (FUP) erstellten SPS-Programmen werden Kontaktplan (KOP) bzw. Funktionsplan (FUP) in eine Anweisungsliste (AWL) umgewandelt,
b) zur Bereitstellung für den Diagnosefall wird der AWL-Code des SPS-Programms maschinell analysiert und hierzu eine Schrittkettenanalyse durchgeführt, bei der die im Programmcode ausgeführten Schrittketten bezüglich der verwendeten Speicheroperanden und bezüglich deren Abfolge identifiziert werden und dadurch im Programmcode ausgeführte Schrittketten automatisch aufgefunden werden,
c) die im Schritt b gefundenen Schrittketten werden in Form einer Wissensbasis aufbereitet und daraus die oberste Entscheidungsebene eines Fehlerbaumes abgeleitet,
d) aus dem im Schritt b erzeugten Fehlerbaum wird zusammen mit einer Diagnose-Shell derjenige Prozeßschritt und/oder diejenigen Prozeßzustandssignale ermittelt, die zum Stillstand der Anlage oder des Prozesses geführt haben.

2. Verfahren nach Anspruch 1,
dadurch gekennzeichnet ,
daß im SPS-Programm Schrittketten- und Verknüpfungsprogrammteile automatisch erkannt werden.

3. Verfahren nach Anspruch 1,
dadurch gekennzeichnet,
daß zur Aufbereitung des SPS-Programms als Wissensbasis zusätzlich eine Transitionsanalyse durchgeführt wird.

4. Verfahren nach Anspruch 3,
dadurch gekennzeichnet,
daß bei Schrittkettensteuerungen zur Transitionsanlayse die Weiterschaltbedingungen der einzelnen Schritte der Schrittkettenanalyse untersucht und auf Prozeßzustandssignale zurückgeführt werden.

5. Verfahren nach Anspruch 3,
dadurch gekennzeichnet,
daß bei Verknüpfungssteuerungen die Schaltbedingungen untersucht und auf Prozeßzustandssignale zurückgeführt werden.

6. Verfahren nach Anspruch 4,
dadurch gekennzeichnet,
daß bei der Transitionsanalyse logische Verknüpfungen entschlüsselt werden und der bei der Schrittkettenanalyse angelegte Fehlerbaum komplettiert wird.

7. Verfahren nach einem der vorhergehenden Ansprüche,
dadurch gekennzeichnet,
daß die Diagnose mittels eines Rechners, insbesondere eines handelsüblichen PC's, durchgeführt wird.

## Claims

1. Method for automatic diagnosis of defects in processes and/or installations which are monitored by sequence control from a PLC program which is produced as a contact plan (KOP), as a function plan (FUP) or as an instruction list (AWL),
characterized by the following steps,
a) in the case of PLC programs which are produced as a contact plan (KOP) or as a function plan (FUP), the contact plan (KOP) or the function plan (FUP) is converted into an instruction list (AWL),
b) in order to prepare for the diagnosis, the AWL code of the PLC program is analysed by machine and a step chain analysis is carried out for this purpose, in which the step chains executed in the program code are identified in terms of the memory operands used and in terms of their sequence and, in consequence, step chains which are executed in the program code are located automatically,
c) the step chains found in step b are prepared in the form of a knowledge base and the topmost decision level of a fault tree is derived therefrom,
d) that process step and/or those process status signals which have/has led to the installation or the process stopping are/is determined together with a diagnosis shell, from the fault tree produced in step b.

2. Method according to Claim 1,
characterized
in that step chain and logic operation program sections in the PLC program are identified automatically.

3. Method according to Claim 1,
characterized
in that a transition analysis is carried out in order to prepare the PLC program as a knowledge base.

4. Method according to Claim 3,
characterized
in that in the case of step chain controllers for transition analysis, the onward switching conditions of the individual steps in the step chain analysis are investigated and are fed back to process status signals.

5. Method according to Claim 3,
characterized
in that, in the case of logic operation controllers, the switching conditions are investigated and are fed back to process status signals.

6. Method according to Claim 4,
characterized
in that logic links are decoded during the transition analysis and the fault tree which is applied during the step chain analysis is completed.

7. Method according to one of the preceding claims,
characterized
in that the diagnosis is carried out by means of a computer, in particular a commercially available PC.

## Revendications

1. Procédé pour le diagnostic automatique de défaillances dans des processus et / ou des installations, qui peuvent être contrôlés par une commande séquentielle d'un programme SPS (commande par programme enregistrable), pouvant être élaboré en tant que schéma de contacts (KOP), schéma fonctionnel (FUP) ou en tant que liste d'instructions (AWL), caractérisé par les étapes suivantes :
a) dans des programmes SPS élaborés en tant que schéma de contacts (KOP) ou en tant que schéma fonctionnel (FUP), le schéma de contacts (KOP) resp. le schéma fonctionnel (FUP) est converti en une liste d'instructions (AWL),
b) afin de mettre en place le diagnostic, le code AWL du programme SPS est analysé mécaniquement et, à cet effet, une analyse des séquences d'étapes est exécutée dans laquelle les séquences d'étapes réalisées dans le code de programme sont identifiées par rapport aux opérateurs de mémoire utilisés et par rapport à leur séquence et de ce fait, des séquences d'étapes réalisées dans le code de programme sont détectées automatiquement,
c) les séquences d'étapes trouvées à l'étape b sont traitées sous forme d'une base de connaissance et le niveau de décision le plus élevé d'un arbre d'erreurs en est dérivé,
d) l'étape du processus et / ou les signaux d'états du processus, qui ont conduit à l'arrêt de l'installation ou du processus, est(sont) déterminé(s), conjointement avec une structure de diagnostic, à partir de l'arbre d'erreurs produit à l'étape b.

2. Procédé selon la revendication 1, caractérisé en ce que dans le programme SPS, des parties de programme de séquences d'étapes et de liaison sont reconnues automatiquement.

3. Procédé selon la revendication 1, caractérisé en ce que pour le traitement du programme SPS, une analyse de transition est exécutée en complément comme base de connaissance.

4. Procédé selon la revendication 3, caractérisé en ce que lors de commandes à séquences d'étapes pour l'analyse de transition, les conditions de commutation vers l'étape suivante de l'analyse des séquences d'étapes sont examinées et ramenées aux signaux d'états du procédé.

5. Procédé selon la revendication 3, caractérisé en ce que lors de commandes de liaison, les conditions de commutation sont examinées et ramenées aux signaux d'états du procédé.

6. Procédé selon la revendication 4, caractérisé en ce que lors de l'analyse de transition, des liaisons logiques sont décodées et l'arbre d'erreurs établi lors de l'analyse des séquences d'étapes est complété.

7. Procédé selon l'une des revendications précédentes, caractérisé en ce que le diagnostic est exécuté à l'aide d'un ordinateur, notamment d'un PC du type commercial.
